# EUROPÄISCHE PATENTANMELDUNG

(11) **EP 0 661 340 A1**
(43) Veröffentlichungstag der Anmeldung: **05.07.1995**
(21) Anmeldenummer: 94120052.9
(22) Anmeldetag: 17.12.1994
(51) Int. Cl.: C08K 5/09, C08L 23/06

(54) **Formmassen aus Polyethylen und Verfahren zur Herstellung von Formkörpern aus diesen Formmassen**

(30) Priorität: 23.12.1993 DE 4344065; 27.05.1994 DE 4418527
(71) Anmelder: HOECHST AKTIENGESELLSCHAFT, D-65926 Frankfurt am Main (DE)
(72) Erfinder: Ehlers, Jens, Dr., D-46499 Hamminkeln (DE); Gundert, Friedhelm, Dr., D-65835 Liederbach (DE); Gusik, Meinhard, D-46147 Oberhausen (DE); Kellersohn, Rudolf, D-46499 Hamminkeln (DE)

(57) **Zusammenfassung**

Insbesondere zur Verarbeitung durch Ramextrusion geeignete Formmassen aus Polyethylen mit einer mittleren Molmasse von mindestens 10⁶ g/mol enthalten, bezogen auf die Formmasse, 0,05 bis 5,0 Gew.-% eines Salzes einer höheren Monocarbonsäure oder eines Gemisches solcher Salze. Die Salze oder die Salzgemische schmelzen zwischen 80 und 220°C und ihre Schmelzviskosität bei der Verarbeitungstemperatur der Formmasse beträgt höchstens 50 Pa . s.

## Beschreibung

Die Erfindung betrifft neue Formmassen aus ultrahochmolekularem Polyethylen (PE-UHMW) und ein Verfahren zur Herstellung von Formkörpern aus diesen Formmassen durch Ramextrusion. Die neuen Formmassen vermeiden die insbesondere bei der Herstellung dickwandiger Profile durch Ramextrusion von PE-UHMW zu beobachtende Bildung von Rissen im Formkörper.

Unter den Polyethylenen nehmen die PE-UHMW-Typen eine Sonderstellung ein. Man versteht unter dieser Bezeichnung nach dem Niederdruckverfahren erhaltene, lineare Polyethylene mit extrem hoher Schmelzviskosität. Ihre Grenzviskositätszahl beträgt mindestens etwa 1000 ml/g, entsprechend mittleren Molmassen (Gewichtsmittel) von etwa 10⁶ g/mol und mehr. Die Umrechnung der Grenzviskositätszahl in Molmassen erfolgt dabei nach der Margolies-Gleichung, das zur Bestimmung angewandte Verfahren ist z.B. in CZ-Chemie Technik 4 (1974), Seite 129 ff, beschrieben.

PE-UHMW zeichnet sich durch eine Reihe physikalischer Kenndaten aus, die ihm vielfältige Einsatzmöglichkeiten eröffnen. Hervorzuheben sind sein hoher Verschleißwiderstand, sein niedriger Reibungskoeffizient gegenüber anderen Werkstoffen, sein ausgezeichnetes Zähigkeitsverhalten und seine hohe Wärmestandfestigkeit. Überdies ist es bemerkenswert beständig gegenüber zahlreichen Chemikalien.

Aufgrund dieser besonderen mechanischen, thermischen und chemischen Eigenschaften hat ultrahochmolekulares Polyethylen in den verschiedensten Anwendungsgebieten Eingang als hochwertiger Spezialwerkstoff gefunden. Beispiele sind die Textil-, Lebensmittel- und Verpackungsindustrie, die chemische Industrie und der Maschinenbau.

Für die Verarbeitung zu Formkörpern sind wegen des thermischen Verhaltens von PE-UHMW nur wenige Verfahren geeignet. In der industriellen Technik eingeführt sind Sinterprozesse sowie die Ramextrusion. Die Verarbeitung durch Spritzgießen erfordert entweder eine spezielle Ausgestaltung der Spritzgußmaschinen oder den Einsatz eigens für diesen Zweck hergestellter ultrahochmolekularer Polyethylentypen.

Unter der Ramextrusion versteht man ein Drucksinterverfahren, das insbesondere zur kontinuierlichen Herstellung endloser Profile aus Kunststoffen mit hoher Schmelzviskosität, wie PE-UHMW und Polytetrafluorethylen Anwendung findet. Bei dieser Arbeitsweise wird in einer Kolbenspritz- oder Kolbenstrangpresse Pulver in einem beheizten Werkzeug unter Druck zu Extrudaten, wie Stäbe und Rohre, gesintert. Hierzu trägt man pulverförmiges Polymerisat chargenweise über eine Dosierrinne in ein Extrusionsrohr ein und preßt es mit einem Stempel, der durch eine hydraulische, steuerbare Antriebsvorrichtung hin und her bewegt wird, zu einem Strang. Das Pressen hat neben der Verdichtung des Pulvers die Aufgabe, die aufeinanderfolgenden Preßlinge in die Heizzone des Extrusionsrohres zu befördern, in der sie bei Temperaturen oberhalb des Kristallitschmelzpunktes (etwa 135°C) zum Extrudat zusammengesintert werden. Der zum Verdichten erforderliche Druckwiderstand entsteht durch die Reibung zwischen polymerem Material und Werkzeugwand.

Die Herstellung von Formkörpern aus PE-UHMW durch Ramextrusion ist in der DE-C-1 778 258 beschrieben. Nach dieser Veröffentlichung wird thermisch plastifiziertes, hochmolekulares Niederdruckpolyethylen unter Verwendung eines Kolbenextruders mit einem Extrusionswerkzeug verformt. Hierbei wird das Polyethylen unter Einwirkung eines Verdichtungsdruckes von mindestens 200 bis höchstens 1500 kp/cm² (entsprechend 19,6 bis höchstens 147,1 MPa) während einer Verweilzeit von mehreren Minuten, vorzugsweise 3 bis 8 Minuten, im Werkzeug von etwa 240 auf 100°C abgekühlt.

Gegenstand der DE-C-2 829 232 ist ein Verfahren für die optimale Verarbeitung von hochmolekularem Polyethylen mittels Ramextrusion durch Bereitstellung der Daten, die für die Auslegung des hierzu verwendeten Kolbenextruders erforderlich sind. Das Verfahren besteht in der exakten Einstellung der Verweilzeit des Polyethylens im Werkzeug in Abhängigkeit vom äquivalenten Durchmesser des Extrusionswerkzeuges. Als äquivalenter Durchmesser wird der Quotient aus der Querschnittsfläche und dem Umfang der Querschnittsfläche des Extrusionswerkzeuges verstanden.

Diese Arbeitsweise hat sich insbesondere zur Herstellung von Profilen mit geringem Durchmesser oder mit geringer Wandstärke bewährt. Probleme können jedoch bei der Herstellung dickwandiger und größerer Profile auftreten. Häufig zeigt deren Oberfläche Querrisse, die eine Folge zu hoher Wandschubspannungen während des Extrusionsvorganges sind. Das Auftreten dieser Mängel ist nicht allein auf die Ausgestaltung des Extruders, z.B. die Geometrie des Werkzeuges zurückzuführen, sie können auch durch die Eigenschaften des zu verarbeitenden pulverförmigen Polymerisats, z.B. seine Molmasse, seine Molmassenverteilung und seine Rieselfähigkeit hervorgerufen werden. Es ist nicht immer möglich, diese und weitere Parameter bei der Auslegung der Extruder zu berücksichtigen. Abgesehen davon, daß die Einsatzmöglichkeit der Extruder dadurch stark begrenzt wird, muß die Einstellung der Parameter sehr genau erfolgen, denn Abweichungen von den geforderten Werten können oft nicht toleriert werden, weil sie zu Fertigprodukten unzureichender Qualität führen.

Es bestand daher die Aufgabe, zur Verarbeitung durch Ramextrusion geeignete Formmassen auf Basis von ultrahochmolekularem Polyethylen zu entwickeln, die allgemein anwendbar sind und insbesondere nicht den Einsatz speziell ausgestalteter Werkzeuge erfordern. Darüber hinaus sollen durch den Verarbeitungsprozeß die ausgezeichneten physikalischen Eigenschaften des PE-UHMW nicht geschädigt werden. Schließlich müssen Produkte aus diesen Formmassen auch hohen Qualitätsanforderungen genügen.

Die Erfindung besteht in Formmassen aus Polyethylen mit einer viskosimetrisch gemessenen mittleren Molmasse von mindestens 10⁶ g/mol. Sie sind dadurch gekennzeichnet, daß sie, bezogen auf die Formmasse, 0,05 bis 5,0 Gew.-% eines Salzes einer höheren Monocarbonsäure oder eines Gemisches solcher Salze enthalten, das Salz bzw. das Salzgemisch zwischen 80 und 220°C schmilzt und die Schmelzviskosität des Salzes bzw. des Salzgemisches bei der Verarbeitungstemperatur der Formmassen höchstens 50 Pa.s beträgt.

Erfindungsgemäß können als Basis der neuen Formmassen alle Arten ultrahochmolekularer Polyethylene eingesetzt werden, unabhängig von der Art ihrer Herstellung. Dementsprechend lassen sich Polymerisate verwenden, die nach dem Ziegler-Prozeß durch Polymerisation von Ethylen in Gegenwart von Metallen der Gruppen IV B - VI B des Periodensystems der Elemente (IUPAC-Version) zusammen mit metallorganischen Verbindungen der Elemente der Gruppen I A - III A des Periodensystems der Elemente (IUPAC-Version) erhalten wurden. Ebenso können aber auch ultrahochmolekulare Polyethylene eingesetzt werden, deren Herstellung aus wasserfreiem und sauerstofffreiem Ethylen in der Gasphase in Gegenwart Chromoxid und Metallalkyl enthaltender Trägerkatalysatoren erfolgte.

Salze höherer Monocarbonsäuren (auch als Metallseifen bezeichnet) finden neben zahlreichen anderen Substanzen wie Paraffinen, Fettalkoholen, Fettsäuren, Fettsäureestern und Säureamiden, als Gleitmittel u.a. auch bei der Thermoplastverarbeitung, Anwendung. Ihre Aufgabe ist es in diesem Fall, den Aufschmelzvorgang zu fördern, die innere Reibung in der Thermoplastschmelze zu erniedrigen und dadurch den Fluß der Schmelze zu erleichtern. Außerdem erhöhen sie beim Extrudieren und Spritzgießen den Ausstoß und verhindern das Kleben der Schmelze an den heißen Oberflächen der Maschinenteile.

Überraschenderweise verhindert der Zusatz ganz bestimmter, aus der Vielzahl verschiedener Verbindungen ausgewählter Gleitmittel die Entstehung von Querrissen bei der Ramextrusion von PE-UHMW. Hierbei ist zu berücksichtigen, daß PE-UHMW beim Erhitzen im Gegensatz zu anderen Thermoplasten ohne thermischen Abbau keine Schmelze bildet sondern in einen viskoelastischen Zustand übergeht. Die Metallsalze wirken bereits in so geringer Konzentration, daß sie die hervorragenden mechanischen und thermischen Eigenschaften des Werkstoffs und der aus ihm hergestellten Formkörper nicht beeinträchtigen.

Die in den erfindungsgemäßen Formmassen enthaltenen Salze höherer Monocarbonsäuren leiten sich von geradkettigen oder verzweigten aliphatischen oder aromatischen Monocarbonsäuren mit 10 bis 24, insbesondere 12 bis 20 Kohlenstoffatomen im Molekül ab. Als Kationen enthalten sie metallische Elemente der Gruppen I A bis III A und I B bis III B des Periodensystems der Elemente (IUPAC-Version) in Form ein- oder mehrwertiger Ionen. Bevorzugt sind Seifen der Metalle Calcium, Magnesium und Zink. Die Seifen können auch zwei oder mehr verschiedene Metalle enthalten oder basische Salze sein. Ebenso können Gemische verschiedener Metallseifen verwendet werden.

Maßgebend für ihre Eignung, die Verarbeitbarkeit von ultrahochmolekularem Polyethylen durch Ramextrusion zu verbessern, ist das Schmelzverhalten der carbonsauren Salze. Die in den erfindungsgemäßen Formmassen enthaltenen Salze schmelzen zwischen 80 und 220°C, vorzugsweise zwischen 110 und 180°C. Ihre Schmelzviskosität bei der Verarbeitungstemperatur beträgt höchstens 50 Pa.s, Schmelzviskositäten von höchstens 10 Pa.s und insbesondere höchstens 1 Pa.s werden bevorzugt. Unter Verarbeitungstemperatur wird die Temperatur verstanden, bei der die Formmasse im Ramextruder extrudiert wird. Die Bestimmung der Schmelzviskosität erfolgt in bekannter Weise durch Viskosimetrie im Rotationsviskosimeter RV 20 der Firma Haake, Messung bei 200°C (vgl. Kulicke, Fließverhalten von Stoffen und Stoffgemischen, Hühtig + Wepf, Basel, Heidelberg, New York 1986).

Zur Herstellung der Formmassen der Erfindung setzt man die Metallseifen dem Polymerisat in Konzentrationen von 0,005 bis 5,0, insbesondere 0,01 bis 2,0 Gew.-%, bezogen auf die Formmassen, zu. Um eine gleichmäßige Verteilung der Salze im Polyethylen sicherzustellen, mischt man zweckmäßigerweise die Komponenten als Pulver in konventionellen Mischern oder Homogenisatoren. Gegebenenfalls können noch weitere Additive wie Lichtstabilisatoren, Antioxydantien oder Farbstoffe zugesetzt werden. Das homogene Gemisch kann unmittelbar oder nach Agglomerieren z.B. zu feinteiligen Partikeln der weiteren Verwendung zugeführt werden.

In den nachfolgenden Beispielen wird die Erfindung näher beschrieben, sie wird jedoch nicht auf die dargestellten Ausführungsbeispiele beschränkt.

### Beispiele:

Ultrahochmolekulares Polyethylen mit einer mittleren molaren Masse von 7,3 . 10⁶ bis 9,2 . 10⁶ g/mol, das jeweils 0,5 Gew.-% (bezogen auf die Formmasse) der in der nachstehenden Tabelle aufgeführten Metallseifen enthält, wird auf einem horizontalen Ramextruder mit 1,2 m Werkzeuglänge unter einem Druck von etwa 12 MPa bei Temperaturen (am Einfülltrichter beginnend) von 305/300/230/195°C zu Vollstäben von 50 mm Durchmesser verarbeitet. Die Beurteilung der Rißbildung bei den erhaltenen Formkörpern erfolgt visuell.

| Metallseife 1) | Schmelzbereich 2) [°C] | Schmelzviskosität 3) [Pa.s] | Rißbildung |
|---|---|---|---|
| Ca-stearat | 120-160 | >10³ | sehr stark |
| Mg-stearat | 115-150 | 31 | stark |
| Zn-stearat | 118-122 | 0,07 | keine |

| | | | |
|---|---|---|---|
| 1) Produkt der Fa. Peter Greven, Fettchemie GmbH & Co KG, Bad Münstereifel. Basis: Talgfettsäure der Zusammensetzung C₁₆/C₁₈-monocarbonsäure im Verhältnis 1 : 2 bis 1 : 3; Reinheit 94-98 % | | | |
| 2) gemessen mit der Kofler-Bank | | | |
| 3) gemessen bei 200°C mit dem Viskosimeter RV 20 der Fa. Haake | | | |

## Patentansprüche

1. Formmassen aus Polyethylen mit einer viskosimetrisch gemessenen mittleren Molmasse von mindestens 10⁶ g/mol, dadurch gekennzeichet, daß sie, bezogen auf die Formmasse, 0,05 bis 5,0 Gew.-% eines Salzes einer höheren Monocarbonsäure oder eines Gemisches solcher Salze enthalten, das Salz bzw. das Salzgemisch zwischen 80 und 220°C schmilzt und die Schmelzviskosität des Salzes bzw. des Salzgemisches bei der Verarbeitungstemperatur der Formmassen höchstens 50 Pa . s beträgt.

2. Formmassen nach Anspruch 1 dadurch gekennzeichnet, daß die höhere Monocarbonsäure eine geradkettige oder verzweigte aliphatische oder aromatische Monocarbonsäure mit 10 bis 24 insbesondere 12 bis 20 Kohlenstoffatome im Molekül ist.

3. Formmassen nach Anspruch 1 oder 2 dadurch gekennzeichnet, daß das Salz der Monocarbonsäure als Kation ein metallisches Element der Gruppen IA bis IIIA oder IB bis IIIB des Periodensystems der Elemente enthält.

4. Formmassen nach Anspruch 3 dadurch gekennzeichnet, daß das metallische Element Magnesium, Calcium oder Zink ist.

5. Formmassen nach einem oder mehreren der Ansprüche 1 bis 4 dadurch gekennzeichnet, daß das Salz oder das Salzgemisch zwischen 100 und 200°C, vorzugsweise 110 bis 180°C schmilzt.

6. Formmassen nach einem oder mehreren der Ansprüche 1 bis 5 dadurch gekennzeichnet, daß die Viskosität des Salzes oder des Salzgemisches bei der Verarbeitungstemperatur der Formmassen höchstens 10 Pa . s, insbesondere höchstens 1 Pa . s beträgt.

7. Formmassen nach einem oder mehreren der Ansprüche 1 bis 6 dadurch gekennzeichnet, daß sie, bezogen auf die Formmassen 0,01 bis 2,0 Gew.-% Salz oder Salzgemisch enthalten.

8. Verfahren zur Herstellung von Formkörpern aus Polyethylen mit einer viskosimetrisch gemessenen Molmasse von mindestens 1.000.000 g/mol durch Ramextrusion dadurch gekennzeichnet, daß als Polyethylen Formmassen nach einem oder mehreren der Ansprüche 1 bis 7 eingesetzt werden.
